Europäisches Patentamt

(19) ○))) European Patent Office

Office européen des brevets

(11) Publication number: **0 323 817 B1**

(12)  # EUROPEAN PATENT SPECIFICATION

(45) Date of publication of patent specification:
22.05.91 Bulletin 91/21

(51) Int. Cl.⁵: **B60S 1/34**, B60S 1/48

(21) Application number: **88830564.6**

(22) Date of filing: **27.12.88**

(54) Variable-radius windscreen wiper device for motor vehicles.

(30) Priority: **29.12.87 IT 5393187 U**

(43) Date of publication of application:
**12.07.89 Bulletin 89/28**

(45) Publication of the grant of the patent:
**22.05.91 Bulletin 91/21**

(84) Designated Contracting States:
**DE ES FR GB IT SE**

(56) References cited:
**EP-A- 0 180 142**
**EP-A- 0 272 480**
**CH-A- 469 582**
**GB-A- 2 091 544**

(73) Proprietor: **INDUSTRIE MAGNETI MARELLI S.p.A.**
**Via Adriano 81**
**I-20128 Milano (IT)**

(72) Inventor: **Pedani, Giuseppe**
**Via Pacini 66**
**I-20131 Milano (IT)**

(74) Representative: **Buzzi, Franco et al**
**c/o Jacobacci-Casetta & Perani S.p.A. Via Alfieri, 17**
**I-10121 Torino (IT)**

EP 0 323 817 B1

## Description

The present invention relates in general to windscreen wiper devices for motor vehicles of the type disclosed e.g. in EP-A-0 180 142.

More particularly, the invention concerns a variable-radius windscreen wiper device of the type comprising a motor-driven operating pin which is movable with a reciprocating rotary motion and drives a box carrying an attachment pin for a wiper arm, and a fixed gear which is coaxial with the operating pin and meshes with an idler gear supported rotatably by the box and meshed with a final gear connected to the attachment pin for rotation therewith, and a device for supplying a windscreen-washing liquid.

The object of the present invention is to produce a windscreen-wiper device of the type specified above, which is formed so as to enable the windscreen-washing liquid to be supplied directly to the upper arm without the use of external tubes which are subject to damage and breakage.

According to the invention, this object is achieved by virtue of the fact that the operating pin, the attachment pin and the pin of the idler gear are hollow, and the supply circuit comprises axial passages formed through the cavities of the pins and interconnected by radial passages formed in the box of the device.

These radial passages conveniently have a flattened shape, so as to keep the device compact.

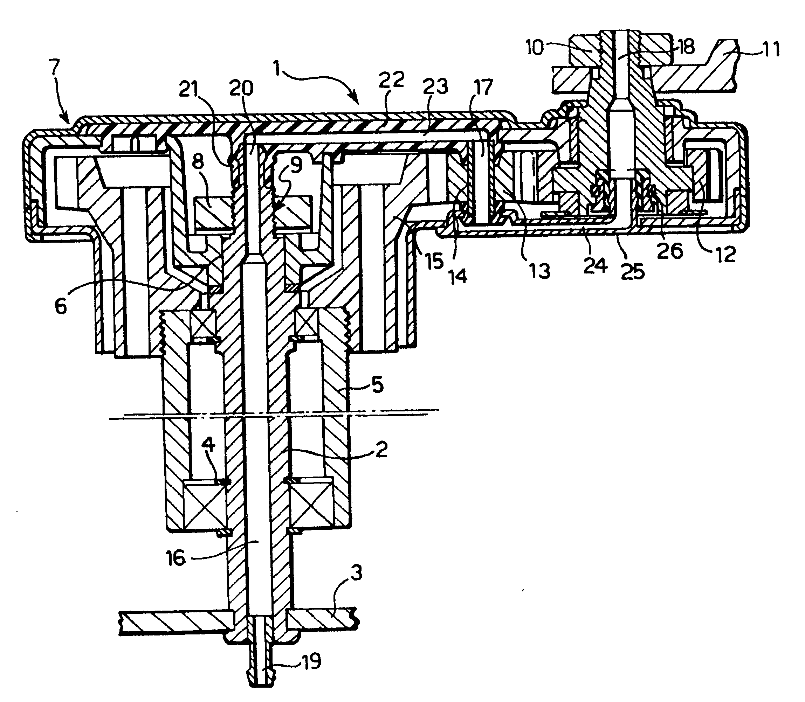

Further characteristics and advantages of the present invention will become clear from the detailed description which follows with reference to the appended drawing, provided by way of non-limiting example, which shows a variable-radius windscreen wiper device according to the invention, schematically and in cross-section.

With reference to the drawing, a variable-radius windscreen wiper device for motor vehicles is generally indicated 1. It comprises an operating pin 2 having one end coupled to a transmission member 3 driven by a conventional motor-driven unit, not illustrated in the drawing, for imparting a reciprocating rotary motion to the operating pin.

The operating pin 2 is supported, by means of rolling bearings 4, by a tubular support 5 which is intended to be fixed to the structure of a motor vehicle. The end of the operating pin 2 opposite the transmission member 3 is coupled torsionally at 6 to a box, generally indicated 7. The pin 2 is clamped axially to the box 7 by means of a retaining nut 8 screwed on to a threaded portion 9.

An attachment pin, to which a windscreen wiper arm 11 provided with a wiper blade, not illustrated, is fixed in conventional manner, is indicated 10.

The attachment pin 10 is supported rotatably by the box 7 in a position spaced from the operating pin 2, and is rotated by the latter by means of a final gear 12 coupled to the attachment pin 10 and meshing with an idler gear 13 freely rotatably supported within the box 7 by means of a pin 14.

The idler gear 13 is in turn meshed with a fixed gear 15 coaxial with the operating pin 2 and fixed to the tubular support element 5.

The device 1 also includes a circuit for supplying a windscreen-washing liquid to the wiper arm 11. This circuit is formed entirely within the device 1 and, for this purpose, the operating pin 2, the idler pin 14 and the attachment pin 10 are hollow so as to form respective axial passages 16, 17 and 18. The passage 16 communicates at one end with a tubular inlet connector 19 for connection to a source for the supply of the windscreen-washing liquid and at the opposite end with a tubular connector 20 which is inserted sealingly within a tubular connector 21 formed integrally with a body 22 of plastics material inserted and snap-engaged in the box 7. The body 22 forms a radial passage 23 which puts the passage 16 of the operating pin 2 into communication with the passage 17 of the idler pin 14. The radial passage 23 has a flattened profile in cross-section.

The passage 17 in turn communicates with the passage 18 of the attachment pin 10 through a second radial passage 24 formed in a body 25 of plastics material, also snap-engaged with the box 7. The connecting zone between the passage 24 and the passage 18 is the only one in the washing-liquid supply circuit in which there is relative movement between the parts (the body 25 and the pin 10) and an annular sealing element 26 is provided in this zone to prevent the loss of liquid.

In operation, the wiper arm 11 is moved along a path of a variable radius by virtue of the combined rotational movement of the attachment pin 10 about the axis of the operating pin 2 (together with the box 7) and about its own axis respectively, by means of the set of gears 12, 13 and 15. The supply circuit formed by the passages 16, 23, 17, 24 and 18 enables the washing liquid to be supplied directly to the wiper arm 11 without the need to use external tubes.

## Claims

1. A variable-radius windscreen wiper device (1) for motor vehicles, comprising a motor-driven operating pin (2) which is movable with a reciprocating rotary motion and drives a box (7) carrying an attachment pin (10) for a wiper arm, and a fixed gear (15) which is coaxial with the operating pin (2) and meshes with an idler gear (13) supported rotatably by the box (7) and meshed with a final gear (13) connected to the attachment pin (10) for rotation therewith, and a device for supplying a windscreen-washing liquid to the wiper arm, characterised in that the operating pin (2), the attachment pin (10) and the pin (14) of the idler gear (12) are hollow, and in that the supply circuit comprises axial passages (16, 17, 18) formed through the cavities of the pins (2, 14, 10) and interconnected by radial passages (23, 24) formed in the box (7) of the windscreen wiper device.

2. A windscreen wiper device according to Claim 1, characterised in that the radial passages (23, 24) are formed in separate bodies (22, 25) fitted to the box (7) of the device.

3. A windscreen wiper device according to Claim 2, characterised in that the radial passages (23, 24) are flattened in section.

## Ansprüche

1. Scheibenwischervorrichtung (1) mit veränderlichem Radius für kraftfahrzeuge, umfassend einen motorgetriebenen Arbeitsstift (2), der in hin- und hergehender Drehbewegung bewegbar ist und ein Gehäuse (7) mit einem Befestigungsstift (10) für einen Wischarm antreibt, und ein festes Zahnrad (15), das koaxial zu dem Arbeitsstift (2) angeordnet ist und mit einem Leerlaufrad (13) in Eingriff steht, das drehbar von dem Gehäuse (7) gehalten wird und wiederum in ein Endrad (12) eingreift, das mit dem Befestigungsstift (10) zur Drehung mit diesem verbunden ist, sowie eine Vorrichtung zur Zufuhr einer Scheibenreinigungsflüssigkeit an den Wischarm, **dadurch gekennzeichnet,** daß der Arbeitsstift (2), der Befestigungsstift (10) und der Stift (14) des Leerlaufrades (13) hohl sind, und daß der Zufuhrkreislauf axiale Kanäle (16, 17, 18) aufweist, die in den Hohlräumen der Stifte (2, 14, 10) ausgebildet sind und durch radiale Kanäle (23, 24), welche im Gehäuse (7) der Scheibenwischervorrichtung ausgebildet sind, miteinander verbunden sind.

2. Scheibenwischervorrichtung nach Anspruch 1, **dadurch gekennzeichnet,** daß die radialen Kanäle (23, 24) in getrennten Körpern (22, 25) ausgebildet sind, die im Gehäuse (7) der Vorrichtung angeordnet sind.

3. Scheibenwischervorrichtung nach Anspruch 2, **dadurch gekennzeichnet,** daß die radialen Kanäle (23, 24) im Querschnitt abgeflacht sind.

## Revendications

1. Dispositif d'essuie-glaces (1) à rayon variable pour des véhicules à moteur, comprenant une tige de commande (2), entraînée par moteur, qui peut se déplacer avec un mouvement rotatif alternatif et qui entraîne une boîte (7) portant une tige de fixation (10) pour un bras d'essuie-glace, et un engrenage fixe (15) qui est coaxial à la tige de commande (2) et s'engrène avec un engrenage mobile (13) supporté de manière rotative par la boîte (7) et engrené avec un engrenage final (12) relié à la tige de fixation (10) pour tourner avec cette dernière, et un dispositif pour amener un liquide lave-glace au bras d'essuie-glace, caractérisé en ce que la tige de commande (2), la tige de fixation (10) et la tige (14) de l'engrenage mobile (13) sont creuses, et en ce que le circuit de distribution comprend des passages axiaux (16, 17, 18) formés à travers les cavités des tiges (2, 14, 10) et reliés entre eux par des passages radiaux (23, 24) formés dans la boîte (7) du dispositif d'essuie-glaces.

2. Dispositif d'essuie-glaces selon la revendication 1, caractérisé en ce que les passages radiaux (23, 24) sont formés dans des corps séparés (22, 25) adaptés sur la boîte (7) du dispositif.

3. Dispositif d'essuie-glaces selon la revendication 2, caractérisé en ce que les passages radiaux (23, 24) ont une section transversale aplatie.